# NEUE EUROPÄISCHE PATENTSCHRIFT

(11) **EP 1 631 142 B2**
(45) Veröffentlichungstag und Bekanntmachung des Hinweises auf die Entscheidung über den Einspruch: **13.04.2016**
(45) Hinweis auf die Patenterteilung: 10.08.2011
(21) Anmeldenummer: 04739661.9
(22) Anmeldetag: 07.06.2004
(51) Int. Cl.: A01J 5/007

(54) **VERFAHREN UND VORRICHTUNG ZUM MELKEN EINES TIERES**
METHOD AND DEVICE FOR MILKING AN ANIMAL
PROCÉDÉ ET DISPOSITIF POUR TRAIRE UN ANIMAL

(30) Priorität: 06.06.2003 DE 10326108
(43) Veröffentlichungstag der Anmeldung: 08.03.2006
(73) Patentinhaber: GEA Farm Technologies GmbH, 59199 Bönen (DE)
(72) Erfinder: KAEVER, Peter, 59302 Oelde (DE); SCHULZE WARTENHORST, Bernhard, 48231 Warendorf (DE); KRONE, Otto, 49509 Recke (DE); FRENSER, Reinhard, 33378 Rheda-Wiedenbrück (DE)
(74) Vertreter: BSB Intellectual Property Law
(86) Internationale Anmeldenummer: PCT/EP2004/006128
(87) Internationale Veröffentlichungsnummer: WO 2004/107853

(56) Entgegenhaltungen:
- WO-A-02/05629
- WO-A-02/23975
- WO-A1-2005/007766
- DE-C1- 4 335 699
- US-A- 5 970 910

## Beschreibung

Der Gegenstand der Erfindung bezieht sich auf ein Verfahren zum maschinellen Melken eines Tieres, beispielsweise einer Kuh, beim welchen ein pulsierender Unterdruck mit aufeinander folgenden Evakuierungsphasen und Belüftungsphasen in einem Melkbecher über einen zugeordneten Pulsator erzeugt wird, sowie auf einen Pulsator. Obwohl die Erfindung im folgenden mit Bezug auf die Anwendung beim Melken von Kühen beschrieben wird, ist es aber ebenso möglich, die Erfindung beim Melken von anderen milchabgebenden Tieren, wie z.B. Ziegen, Schafen, Büffeln, Lamas, Kamelen, Dromedaren, Yaks etc. einzusetzen.

Verfahren sowie Vorrichtungen, bei denen ein pulsierender Unterdruck mit abwechselnd aufeinander folgenden Saugphasen und Entlastungsphasen in einem Melkbecher eines Melkzeugs erzeugt wird, um ein maschinelles Melken von Tieren zu ermöglichen, sind an sich bekannt.

Bei derartigen Verfahren bzw. Vorrichtungen wird insbesondere nach Durchführung einer Stimulationsphase ein im wesentlichen gleichmäßig pulsierender Unterdruck im Pulsraum eines Melkbechers erzeugt, um ein im Zitzenraum im Inneren des Melkbechers vorgesehenes Zitzengummi in eine pulsierende Melkbewegung zu versetzen.

Hierzu umfasst die Vakuumeinrichtung einer Saugmelkanlage eine Vakuumpumpe, ein Vakuumventil, Druckverbindungsleitungen zu den Melkbechern sowie eine Steuereinrichtung zur Erzeugung von Ventilsteuerimpulsen. Durch die Steuereinrichtung wird ein Ventilöffnungsimpuls und Ventilschließungsimpuls erzeugt. Die Vakuumpumpe der Anlage erzeugt einen im wesentlichen konstanten Unterdruck, der etwa dem Pulsationsdruck entspricht.

In fest vorgegebenen Zeitabständen werden von der Steuereinrichtung Steuersignale zum Öffnen des Ventils der Vakuumeinrichtung erzeugt, so dass im Melkbecherzwischenraum im wesentlichen abrupt ein Unterdruck aufgebaut wird. Dieses Vakuum wird über eine fest vorgegebene Zeitdauer aufrechterhalten. Ebenso wie beim Vakuumaufbau wird nach Erhalt eines weiteren Steuerimpulses der Druck im Melbecherzwischenraum plötzlich abgebaut, indem der Pulsraum wieder evakuiert wird. Innerhalb einer voreingestellten Pulsationsperiode wird dieser Vorgang gleichmäßig wiederholt. Da sowohl der Druckaufbau als auch der Druckabbau im wesentlichen abrupt erfolgen, d. h. unter Vernachlässigung der Trägheit des Systems und der Größe von Anlagenteilen, die mit ihrem Volumen an der Vakuumbildung beteiligt sind, ist die Zitze eines Tieres beispielsweise in der Belüftungsphase einer schlagartigen Belastung ausgesetzt, weil das Zitzengummi schlagartig einfaltet und auf die empfindliche Zitze aufschlägt. Dies kann während eines Melkvorgangs zu einem unangenehmen Gefühl für das Tier führten. In Reaktion auf dieses Gefühl kann es zu einer gestörten oder sogar zu einer unvollständigen Milchabgabe durch das Tier kommen.

Diese Problematik sowie weitere Nachteile, die sich durch die schlagartige Veränderung des Druckes ergeben, sind bekannt. Es sind auch bereits Lösungsvorschläge unterbreitet worden. Durch die WO 02/05629 ist beispielsweise ein Verfahren sowie eine Vorrichtung zur Steuerung und Überwachung einer Saugmelkanlage bekannt, bei welcher ein pulsierender Unterdruck mit abwechselnd aufeinander folgenden Druckänderungsphasen, nämlich Saugphasen und Entlastungsphasen in einem Melkbecher eines Melkzeuges über ein Pulsatorventil erzeugt werden. Das Pulsatorventil wird über Steuersignale angesteuert. In den Phasenübergängen zum kontinuierlichen Druckaufbau und/oder Druckabbau erfolgt eine mehrfache kurzzeitige Ansteuerung des Pulsatorventils. Durch diese Maßnahme wird der Druckverlauf in den Phasenübergängen so beeinflusst, dass ein langsamerer Druckaufbau bzw. Unterdruckaufbau ermöglicht und eine verbesserte Verträglichkeit erzielt, indem die Phasenübergänge flacher gestaltet werden. Die auftretenden Probleme aufgrund von schlagartigen Bewegungen des Zitzengummis beim Vakuumauf- bzw. Vakuumabbau können so vermieden werden. Das vorhandene Pulsatorventil wird durch kurzzeitiges Ansteuern mit Öffnungs- bzw. Schließungsimpulsen dazu verwendet, den Druckverlauf flacher zu machen. Nachteilig bei flacheren Druckänderungen ist allerdings die insgesamt größere Zeitdauer eines Pulszyklus. Nachteilig ist auch die abnehmende Melkgeschwindigkeit.

Ferner ist durch die WO 02/23975 A1 ein Verfahren zum Melken von Milchresten für ein möglichst vollständiges Ausmelken von im Euter vorhandener Milch, insbesondere in den Endphasen des Melkvorgangs, bekannt. Nach diesem Verfahren wird ein Zitzengummi in einem Melkbecher durch einen Saugunterdruck über einstellbare Pulsationsphasen mit abwechselnden Saugphasen und Entlastungsphasen und eine Pulsationsintensität in eine Bewegung versetzt, um einen Milchstrom zu erreichen. Der Milchvolumenstrom wird kontinuierlich erfasst, wobei bei einem nachlassenden Volumenstrom die Zitzengummibewegung gezielt verändert wird.

Aus der DE 69218 409 T2 ist ein Melkverfahren bekannt, bei dem in der Massageperiode, der Vormelkphase oder auch nach abgeschlossener Hauptmelkphase in der Nachmelkphase der pulsierende Druck in der Druckanstiegsphase und in der Druckabnahmephase mit einer geringeren Rate geändert wird. Dadurch, dass der Verlauf der Druckänderung nur außerhalb der Hauptmelkphase mit geringerer Rate geändert wird, wirkt sich der Nachteil des langsameren Melkens in diesen Phasen nicht so stark aus, ist aber dennoch vorhanden.

Das Patent US 5,970,910 beschreibt ein Melkverfahren und eine dazugehörige MelkVorrichtung, bei denen zur Schonung der Zitzen eines zu melkenden Tieres bei gleichzeitiger Reduzierung der Restmilchmenge ein Belüftungsvorgang zur Einstellung eines Normaldruckes und/oder ein Evakuierungsvorgang zur Einstellung eines Unterdruckes einer Pulsationskammer in einem Zitzenbecher jeweils mit unterschiedlichen Druckgradienten ausgeführt wird. Der Druckgradient wird verändert, wenn der momentane Druck einen vorgebbaren mittleren, zwischen dem von einer Pumpe in der Vorrichtung erzeugbaren niedrigsten Druck und Normalluftdruck liegenden Druck erreicht.

Hiervon ausgehend liegt der vorliegenden Erfindung die Zielsetzung zugrunde, ein Verfahren sowie eine Vorrichtung anzugeben, durch das bzw. die ein schonenderes Melken eines Tieres bei akzeptabler Geschwindigkeit ermöglicht wird.

Diese Zielsetzung wird durch das erfindungsgemäße Verfahren mit den Merkmalen des Anspruchs 1 bzw. durch die erfindungsgemäße Vorrichtung mit den Merkmalen nach Anspruch 11 erreicht. Vorteilhafte Weiterbildungen und Ausgestaltungen der Erfindung sind Gegenstand der jeweiligen Unteransprüche.

Bei dem erfindungsgemäßen Verfahren zum maschinellen Melken eines Tieres, beispielsweise einer Kuh, wird ein pulsierender Unterdruck in einem Pulsraum eines Melkbechers erzeugt, indem in den Druckänderungsphasen der Unterdruck in dem Pulsraum verändert wird. Dabei wird der Druckverlauf während wenigstens einer Druckänderungsphase über ein Verstellen einer Stelleinheit in wenigstens zwei Geschwindigkeiten gesteuert. Das Verfahren zeichnet sich dadurch aus, dass der zeitliche Verlauf der Evakuierungsphase und/oder
der Belüftungsphase in Abhängigkeit von einer Ventilkennlinie eines Ventils mit wenigstens zwei Ventilöffnungen des Pulsators eingestellt wird, wobei der Ventilquerschnitt des Ventils des Pulsators verändert wird, um die Geschwindigkeit während der Druckänderungsphase zu verändern.

In der Ventillcennlinie können unterschiedliche Einflussfaktoren berücksichtigt werden, die einen Einfluss auf das Öffnen bzw. Schließen des Ventils haben. Insbesondere werden in der Ventilkennlinie die Gegenkräfte berücksichtigt, die aufgrund von Reibung, Gewichtskraft, Federkräften oder anderen Rückstellkräften oder dergleichen eine Auswirkung auf das Ansprechverhalten des Ventils haben.

Unter einer Druckänderungsphase kann im Sinne dieser Anmeldung die Evakuierungsphase und/oder auch die Belüftungsphase eines Pulsatorzyklus verstanden werden.

Der Druckverlauf ist die Geschwindigkeit einer Druckänderung mit der Zeit. Schnellere Druckänderungen erzeugen steilere Druckverläufe als langsamere Druckänderungen mit flacheren Druckverläufen.

Es können auch zwei (oder mehr) unterschiedliche Geschwindigkeitsstufen vorgesehen sein.

Es wird hier ein solches Steuern durchgeführt, dass die Geschwindigkeitsänderung von einer ersten auf eine zweite Geschwindigkeit durch aktive Steuerungsmaßnahmen bewirkt wird.

Die erfindungsgemäße Verfahrensführung hat viele Vorteile. Durch die zwei Geschwindigkeiten, mit denen eine Druckänderung bewirkbar ist, kann einerseits ein ausreichend schnelles Melken erzielt werden, während andererseits schonend mit der Zitze umgegangen wird.

Die Belüftungsphase kann in zwei Abschnitte eingeteilt werden. In dem ersten Abschnitt kann dann der Druckaufbau mit einer geringeren Geschwindigkeit erfolgen als in dem zweitem Abschnitt.

Der pulsierende Unterdruck wird über einen Pulsator eingestellt, wobei der Druckverlauf während der Druckänderungsphase(n) vorzugsweise über ein Verstellen einer Stelleinrichtung gesteuert wird. Die Stelleinrichtung kann z.B. elektrisch oder auch mechanisch gesteuert werden und sie kann eine mechanische Stellgröße verändern, wie z.B. einen Strömungsquerschnitt.

Während der Evakuierungsphase steigt das Vakuum im Pulsraum des Zitzenbechers auf das höchste Vakuum im Pulsraum an. Die Belüftungsphase wird als die Zeitspanne bezeichnet, in der die Vakuumhöhe vom höchsten Wert im Pulsraum auf einen vorgegebenen niedrigsten Vakuumwert abfällt.

Der Erfindung liegt die prinzipielle Überlegung zugrunde, dass, der zeitliche Verlauf der Evakuierungsphase und/oder der Belüftungsphase mittels zweier Druckänderungsgeschwindigkeiten eingestellt wird. Durch diese Möglichkeit wird der Druckabfall bzw. -anstieg im Pulsraum einerseits schnell und andererseits langsam und schonend eingestellt, so dass ein schonendes und dennoch schnelles Melken ermöglicht wird. Der jeweilige Zeitraum, den eine Druckänderungsphase benötigt, wird im Vergleich zum Stand der Technik nur unwesentlich verlängert. Bei einer entsprechend größeren Belüftungsgeschwindigkeit nach Anlegen des Zitzengummis an die Zitze, die dann ja unschädlich ist, kann der Zeitraum gleich lang bleiben.

Der Verlauf des Druckabfalls bzw. Druckanstiegs hat Auswirkung auf die Bewegungsgeschwindigkeit des Zitzengummis. In Abhängigkeit davon, wie der Verlauf der Evakuierungsphase und/oder der Belüftungsphase eingestellt wird, wird eine entsprechende Öffnungs- und/oder Schließgeschwindigkeit des Zitzengummis erzielt. Mit anderen Worten zwischen der Öffnungs- bzw. der Schließgeschwindigkeit des Zitzengummis und der Belüftungsphase bzw. der Evakuierungsphase wird ein Zusammenhang, wie z. B. eine Korrelation hergestellt, die in einer vorteilhaften Weise für den Melkvorgang genutzt wird. In Abkehr von den bisher bekannten Verfahren wird hierdurch das Zitzengummi nicht mehr schlagartig sondern für das Tier verträglicher, angenehmer zur Anlage an die Zitze gebracht.

Vorzugsweise wird der Druckverlauf wenigstens während der Belüftungsphase gesteuert, um ein Schlagen des Zitzengummis auf die Zitze zu verhindern. Außerdem oder anstatt dessen kann der Druckverlauf auch wenigstens während der Evakuierungsphase gesteuert werden.

Es wird die Möglichkeit geschaffen, das Zitzengummi schonend an die Zitze anzubringen. Darüber hinaus wird durch diese Maßnahme in der Evakuierungsphase ein bei sehr schneller Bewegung des Zitzengummis auftretender Rücksprayeffekt der Milch in Richtung der Zitze reduziert und kann bei entsprechender Anpassung weitgehend oder sogar weitestgehend vermieden werden. Die Einstellbarkeit der Druckverläufe, insbesondere deren Dynamik in der Evakuierungs- und in der Belüftungsphase ermöglicht auch eine wesentliche Anpassung an unterschiedliche Zitzengummi, Melkbecher und Melkzeuge wobei unter Umständen zusätzliche mechanische Maßnahmen unterbleiben können.

Es ist mit der erfindungsgemäßen Verfahrensführung beispielsweise möglich, die Bewegung des Zitzengummis bis zum Erreichen einer bestimmten Stellung des Zitzengummis mit einer relativ geringen Geschwindigkeit zu verändern und nach Erreichen dieser Stellung bzw. Verformung das Zitzengummi mit einer hohen Geschwindigkeit zu bewegen. Und umgekehrt.

Vorzugsweise verläuft die Geschwindigkeit der Druckänderung innerhalb eines Zeitabschnittes im wesentlichen kontinuierlich. Es können auch mehr als zwei Zeitabschnitte und/oder mehr als zwei Geschwindigkeiten der Druckänderung vorgesehen sein, zur jeweils drei. Dann kann der Druck zunächst schneller verändert werden, bis etwa der Einfaltdruck des Zitzengummis erreicht wird, dann langsamer bis das Zitzengummi schonend geschlossen oder geöffnet wurde, um dann wieder schneller zu schließen bzw. zu öffnen.

Nach einer weiteren vorteilhaften Ausgestaltung des Verfahrens wird vorgeschlagen, dass der zeitliche Verlauf wenigstens einer Druckänderungsphase, nämlich der Evakuierungsphase und/oder der Belüftungsphase zumindest innerhalb eines Abschnittes diskontinuierlich ist. Durch eine kontinuierliche und/oder diskontinuierliche Einstellbarkeit des zeitlichen Verlaufes der Evakuierungsphase und/oder der Belüftungsphase wird die Möglichkeit geschaffen, die Bewegung des Zitzengummis in vorteilhafter Weise zu beeinflussen.

Vorzugsweise wird der Druckverlauf in einem ersten Abschnitt und in einem Folgeabschnitt der Belüftungsphase derart gesteuert, dass der Druckverlauf in dem ersten Abschnitt flacher ist als in dem Folgeabschnitt und besonders bevorzugt erheblich flacher.

In dem ersten Abschnitt einer Belüftungsphase wird dann der Druck im Pulsraum bis auf etwa den Einfaltdruck erhöht. Das Zitzengummi legt sich langsam an und ein unangenehmes Schlagen auf die Zitze wird deutlich reduziert oder sogar verhindert. Danach erfolgt der Druckaufbau schneller und der Druckverlauf ist steiler. Auch hier sind drei oder mehr Abschnitte möglich, wobei ein vorzugsweise ein mittlerer Abschnitt mit geringerer Druckänderung vorgesehen ist, in dem sich das Zitzengummi an die Zitze anlegt. Nach dem Anlegen wird der Druck vorzugsweise schneller erhöht als im Stand der Technik.

Vorzugsweise wird der Druckverlauf in einem ersten Abschnitt und in einem Folgeabschnitt der Evakuierungsphase derart gesteuert, dass der Druckverlauf in dem ersten Abschnitt flacher ist als in dem Folgeabschnitt und vorzugsweise erheblich flacher.

Im ersten Abschnitt wird der Druck reduziert, bis die Druckdifferenz zwischen Puls- und Zitzenraum etwa dem Einfaltdruck entsprich, vorzugsweise etwas kleiner ist, so dass das Zitzengummi abgehoben hat. Danach wird die Geschwindigkeit der Druckänderung erhöht und der Druckverlauf steiler, um nach dem langsamen Abheben einen schnelleren weiteren Verlauf zu gewährleisten. Das verhindert das sogenannte und unerwünschte Rücksprayen von Milch auf die Zitze. Auch hier sind drei Abschnitte möglich, wobei in einem ersten und dritten Abschnitt die Geschwindigkeit hoch ist und im zweiten Abschnitt in einem Druckbereich in der Nähe des Einfaltdruckes die Geschwindigkeit reduziert wird.

Vorzugsweise wird von dem ersten (flachere Druckänderung) zu dem zweiten Abschnitt (steilere Druckänderung) umgeschaltet, wenn der Druck im Pulsraum in einem Bereich eines Einfaltdruckes des Zitzengummis liegt.

Beispielsweise kann bei einem vorbestimmten Umschaltdruck umgeschaltet werden, wobei in einem ersten Abschnitt der Belüftungsphase bis zum Erreichen des Umschaltdruckes die Geschwindigkeit der Druckänderung geringer ist und anschließend schneller wird, nachdem das Zitzengummi sich an die Zitze angelegt hat.

Der Umschaltdruck ist vorzugsweise etwa der jeweilige Einfaltdruck des Zitzengummis, also der Druck, bei dem der Druckunterschied zwischen Puls- und Zitzenraum etwa dem Einfaltdruck des Zitzengummis entspricht. Der vorbestimmte Umschaltdruck ist vorzugsweise einstellbar.

In der Belüftungsphase (a-Phase) wird vorzugsweise bei einer Druckdifferenz etwas größer als Einfaltdruck von der geringeren Druckänderungsgeschwindigkeit auf eine hohe Druckänderungsgeschwindigkeit umgeschaltet, um ein Einfalten des Zitzengummis mit hoher Geschwindigkeit zu verhindern.

In der Evakuierungsphase wird vorzugsweise bei einer Druckdifferenz etwas größer als Einfaltdruck von der niedrigen Druckänderungsgeschwindigkeit auf eine hohe Druckänderungsgeschwindigkeit umgeschaltet, um ein Öffnen des Zitzengummis mit hoher Geschwindigkeit zu verhindern.

Durch die erfindungsgemäße Verfahrensführung lassen sich Pulsatoren auf einen Melkbecher, ein Melkzeug oder mehrere angeschlossene Melkzeuge, Bio-Melker, unterschiedliche Schlauchlängen und -querschnitte, sowie Volumina im Melkbecher und Melkzeug anpassen. Die Qualität der Pulsation kann damit auch softwaretechnisch kontrolliert werden. Insbesondere mit einer elektronisch nachgeführten Kontrolle der Pulsationsqualität ist es damit auch möglich, die dynamischen Verläufe der Evakuierungsphase bzw. der Belüftungsphase zu kontrollieren.

Gemäß einer vorteilhaften Ausgestaltung des Verfahrens wird vorgeschlagen, dass die Dauer der Evakuierungsphase und/oder der Belüftungsphase eingestellt wird. Der Verlauf der Druckänderung während der Dauer der Evakuierungsphase und/oder der Belüftungsphase kann unterschiedlich sein. Es besteht auch die Möglichkeit, innerhalb der vorgegebenen Dauer den Verlauf entsprechend den technischen und/oder physiologischen Gegebenheiten der Anlage bzw. des Tieres anzupassen. Das erfindungsgemäße Verfahren kann auch in Verbindung mit modernen Steuereinrichtungen oder Steuersystemen in Form z.B. eines Herdenmanagement-Systems durchgeführt werden. Verfügt ein solches Steuersystem über tierindividuelle Daten und ist bekannt, welches Tier einem Melkvorgang unterzogen werden soll, so kann der Verlauf der Evakuierungsphase und/oder der Belüftungsphase auch tierindividuell eingestellt werden. Insbesondere die Geschwindigkeiten können vorgegeben bzw. individuell angepasst sein.

Die unterschiedlichen Geschwindigkeiten des Druckverlaufes können in Abhängigkeit vom Einfaltdruck des zum Melken vorgesehenen Zitzengummis ausgewählt werden. Ebenso sollte der für die Öffnung des Zitzengummis relevante Bereich der Phase so gestaltet werden, dass die daraus resultierende Volumenvergrößerung innerhalb des Melkbechers nicht zu einem Rücksprayeffekt in Richtung der Zitze führt. Auch hierbei kann durch eine Unterteilung des Druckanstiegs in mindestens zwei oder drei oder mehr Bereiche speziell der für das Öffnen verantwortliche Zeitabschnitt gestaltet werden.

Vorzugsweise kann z.B. zunächst ein erster Teil des Strömungsquerschnittes im Pulsatorventil geöffnet werden und später ein weiterer Teil dazu. Damit ergibt sich eine variable Geschwindigkeit der Bewegung.

Es sind Pulsatoren bekannt, die einen unterschiedlichen Systemaufbau aufweisen. Aufgabe eines Pulsators ist es, Luft höheren oder niedrigeren Drucks über die Pulsationsschläuche an den oder die Melkbecher zu leiten, wobei dieser in Verbindung mit dem an der Zitzenspitze anliegendem Unterdruck und der atmosphärischen Außenluft zur Erzeugung einer Bewegung des Zitzengummis verwendet wird. Der Pulsator weist wenigstens ein Ventil auf.

Nach einer weiteren vorteilhaften Ausgestaltung des Verfahrens wird vorgeschlagen, dass der Strömungswiderstand zum Melkbecher hin verändert wird. Bevorzugt ist dabei eine Ausgestaltung, in der der freie Strömungsquerschnitt, insbesondere im Pulsschlauch, verändert wird.

Erfindungsgemäß wird der Ventilquerschnitt eines Ventils des Pulsators verändert, um die Geschwindigkeit während einer Druckänderungsphase zu beeinflussen. Der Ventilquerschnitt bzw. der freie Strömungsquerschnitt eines Ventils kann dazu mehrstufig verändert werden.

Der Ventilquerschnitt kann auch kontinuierlich verändert werden, indem ein Schieber oder dergleichen über die Ventilöffnungen geschoben wird oder bei der Bewegung den freien Strömungsquerschnitt vergrößert. Vorzugsweise erfolgt eine Veränderung des Querschnittes (Vergrößerung oder Verkleinerung) dabei monoton und besonders bevorzugt streng monoton im mathematischen Sinne.

Die Veränderung erfolgt über einen großen Teil der Zeitdauer der Druckänderungsphase. Der Ventilquerschnitt kann z.B. über 25 % oder 50 % der Zeitspanne verändert werden. Bei einer Belüftungs- und Evakuierungsphase im typischen Bereich von z.B. 100 oder z.B. 150 ms beträgt die Dauer der Veränderung dann z.B. 35, 50 oder 70 oder noch mehr Millisekunden. Bei zwei verschiedenen Geschwindigkeitsstufen hingegen beträgt das Verhältnis der beiden Stufen vorzugsweise im Bereich zwischen 1:4 und 4:1, besonders bevorzugt zwischen 1:2 und 2:1. Somit beträgt die Länge eines Abschnittes bei zwei Geschwindigkeitsstufen etwa die Hälfte der Dauer der jeweiligen Druckänderungsphase.

In einer anderen bevorzugten Weiterbildung wird das Pulsatorventil in wenigstens einem Abschnitt einer Druckänderungsphase in einer Schwimmstellung gehalten, indem entsprechende Steuerimpulse auf das Ventil gegeben werden. Die schwimmende Ansteuerung erfolgt grundsätzlich so, wie aus dem Stand der Technik bekannt.

Vorzugsweise wird das Pulsatorventil in wenigstens einem Abschnitt einer Druckänderungsphase in einer variablen Schwimmstellung gehalten. Eine zeitlich variable Schwimmstellung ist auch bevorzugt, bei der mit zunehmender Zeit der Öffnungsquerschnitt vergrößert oder verkleinert wird.

Vorzugsweise wird der Druck im Pulsraum erfasst und bildet vorzugsweise ein Eingangssignal einer Baueinheit, die ein Ausgangssignal liefert, durch welches der Pulsator und/oder ein Strömungswiderstand betätigt wird.

Durch eine angepasste Steuerung wird nunmehr lediglich in den Bewegungszeiträumen des Zitzengummis die Druckwechselgeschwindigkeit verändert, damit die Bewegungsgeschwindigkeit des Zitzengummis reduziert und nachdem sich das Zitzengummi geschlossen hat, auf eine größere, vorzugsweise maximale, Druckwechselgeschwindigkeit gesteuert wird, damit die eigentliche Druckänderangsphasen insgesamt gleich lang bleiben, wie im Stand der Technik. Auch eine Verkürzung der Druckänderungsphasen ist möglich.

Die Evakuierungsphase der Pulsation wird vorzugsweise in mindestens zwei Bereiche unterteilt, wobei der Druckabfall pro Zeiteinheit unterschiedlich gestaltet wird. Der maximale Druckabfall wird damit in Abhängigkeit vom einfaltenden Druck des zum Melken vorgesehenen Zitzengummis ausgewählt.

Durch die vorstehend genannten Maßnahmen sowie Kombinationen dieser Maßnahmen wird ein angenehmeres, nicht derart schlagartiges Berühren der Zitze wie bei konventionellen Melkverfahren erreicht.

Nach einem noch weiteren erfinderischen Gedanken wird ein Pulsator für eine Melkeinrichtung zum Melken eines Tieres, beispielsweise einer Kuh, zum abwechselnden Verbinden einer Unterdruck- und einer Druckquelle mit wenigstens einem Melkbecher vorgeschlagen. Dabei ist eine Einrichtung vorgesehen, mittels derer zumindest der zeitliche Druckverlauf während wenigstens einer Druckänderungsphase in wenigstens zwei Geschwindigkeiten steuerbar ist. Der erfindungsgemäße Pulsator zeichnet sich dadurch aus, dass er wenigstens ein Ventil mit wenigstens zwei Ventilöffnungen aufweist und der zeitliche Verlauf der wenigstens einen Druckänderungsphase in Abhängigkeit von einer Ventilkennlinie des Ventils einstellbar ist, wobei der Ventilquerschnitt des Ventils des Pulsators veränderbar ist, um die Geschwindigkeit während der Druckänderungsphase zu verändern.

Durch diese Maßnahme kann die Bewegung eines Zitzengummis in vorteilhafter Weise verändert bzw. variiert werden. Bei der Einstellung des Verlaufs der Evakuierungsphase und/oder der Belüftungsphase können auch die mechanischen Gegebenheiten am Melkzeug, wie z.B. die Vorspannung, das Material und die Geometrie des Zitzengummis berücksichtigt werden. Des Weiteren kann auch die Vakuumhöhe Eingang in den Verlauf der Evakuierungsphase und/oder der Belüftungsphase finden.

Das Zitzengummi besteht aus einem elastischen Material. Durch die Bewegung des Zitzengummis und durch den Alterungsprozess kann es im Verlauf der Zeit zu einer Veränderung der Bewegungsabläufe des Zitzengummis kommen. Ist das Verhalten des Zitzengummis beispielsweise in Abhängigkeit von der Anzahl der durchgeführten Bewegungen bekannt, so kann dieses Verhalten als Eingangsgröße Berücksichtigung finden, wenn es darum geht, den Verlauf der Evakuierungsphase und/oder der Belüftungsphase einzustellen.

Gemäß einer vorteilhaften Ausgestaltung des Pulsators wird vorgeschlagen, dass die Einrichtung wenigstens ein Zeitglied aufweist, durch das zumindest die Dauer der Evakuierungsphase und/oder der Belüftungsphase einstellbar ist. Es besteht auch die Möglichkeit, das Verhalten des Pulsators an das zu melkende Tier anzupassen, wenn bekannt ist, welches Tier gerade einem Melkvorgang unterzogen wird. Hierbei können tierindividuelle Daten aus einem Herdenmanagementsystem zur Vorgabe des Verlaufs der Evakuierungsphasen und/oder der Belüftungsphasen verwendet werden. Es besteht auch die Möglichkeit, dass zu jedem Tier oder zu Tiergruppen bestimmte Verläufe des Pulsationsdruckes hinterlegt werden. Diese Verläufe werden dann abgefragt, wenn das relevante Tier bzw. Tiergruppe einem Melkvorgang unterzogen wird, bzw. werden. Die Variation bzw. Einstellbarkeit der Evakuierungsphase und/oder der Belüftungsphase kann nicht nur während eines Melkvorgangs, sondern auch während eines Stimulationsvorgangs erfolgen. Hierbei können unterschiedliche Verläufe für einen Stimulationsvorgang bzw. für einen Melkvorgang zur Anwendung kommen.

Es ist ein Pulsatorventil vorgesehen, dessen Öffnungsquerschnitt veränderbar ist. Dieser kann kontinuierlich oder diskontinuierlich veränderbar sein. Möglich ist auch, dass der Öffnungsquerschnitt mehrstufig veränderbar ist.

Der Pulsator bzw. das Pulsatorventil kann ein Pilotventil und ein Hauptventil aufweisen. Eine Ausführung als Direktventil ist auch bevorzugt.

Erfindungsgemäß weist das Ventil wenigstens zwei Ventilöffnungen auf, deren Öffnungsquerschnitt veränderbar ist. Die Öffnungen können als Bohrungen ausgeführt sein. Ebenso sind auch unrunde Querschnitte möglich. Die Ventilöffnungen können unterschiedliche Querschnitte aufweisen.

In einer Ausgestaltung, in der ein vergleichbarer konventioneller Pulsator eine Strömungsöffnung von z.B. etwa 2 mm Durchmesser hat, kann der erfindungsgemäße Pulsator zwei Öffnungen haben, von denen eine größer und eine kleiner ist. Eine erste Öffnung für eine hohe Druckänderungsgeschwindigkeit hat dann z.B. 3 mm oder 5 mm Durchmesser haben, während eine kleinere für langsamere Druckänderungen nur 1 mm Durchmesser hat. Der Durchmesser der Öffnung des konventionellen Pulsators ist ein Kompromiss aus Geschwindigkeit und Belastung der Zitze. Mit dem erfindungsgemäßen Pulsator kann bei hohem Melkkomfort dennoch schnell gemolken werden.

Die genannten Werte sind hier aber nur beispielhaft und können im konkreten Fall abweichen. Die Einrichtung des Pulsators kann ein Element aufweisen, das eine Düse oder eine Blende ist. Vorzugsweise sind die Öffnungsdurchmesser veränderbar, indem z.B. entsprechende Blenden ausgetauscht werden.

Der Pulsator umfasst vorteilhafterweise ein Ventilverschließelement, welches mit den Ventilöffnungen zusammenwirkt. Die Einstellung des freien Strömungsquerschnittes erfolgt dabei durch ein Zusammenwirken von Ventilöffnungen und Ventilverschließelement in Form z.B. eines Schiebeelementes bei einem Schiebesitzventil.

Mit dem Ventil der Einrichtung kann der zeitliche Verlauf der Evakuierungsphase und/oder der Belüftungsphase in Abhängigkeit von einer Ventilkennlinie des Ventils eingestellt werden. Bei dem Ventil kann es sich beispielsweise um ein direkt angesteuertes Schiebesitzventil oder auch um ein Pilotventil eines Pulsators handeln, das gezielt auf einer Ventilkennlinie geführt wird. Das Hauptventil des Pulsators bezieht seine Ansteuerung aus dem Pilotventil. Das Hauptventil folgt in analoger Weise dem Pilotventil und gibt entsprechend seiner Ventilkennlinie Drücke an die Pulsationsleitung weiter. Bei der Ventilkennlinie des Pilotventils kann auch die Kennlinie des Hauptventils berücksichtigt werden, so dass der gewünschte Verlauf der Phasen erreicht wird.

Nach einer noch weiteren vorteilhaften Ausgestaltung des erfindungsgemäßen Pulsators wird vorgeschlagen, dass wenigstens ein Element vorgesehen ist, durch das ein Strömungswiderstand zum Melkbecher hin veränderbar ist. Vorteilhafterweise handelt es sich bei dem Element um eine Düse oder eine Blende. Vorzugsweise handelt es sich bei der Düse um eine elektrisch verstellbare Düse. Hierdurch wird die Möglichkeit geschaffen, den Strömungsquerschnitt vorzugsweise automatisch zu verändern. Es besteht die Möglichkeit, dass kein manueller Eingriff notwendig ist, so dass eine relativ schnelle und erfolgreiche Veränderung des Strömungsquerschnittes somit eine Veränderung des Verlaufs der Evakuierungs- bzw. der Belüftungsphase erzielt wird.

Es wird auch eine Melkvorrichtung mit wenigstens einem Melkzeug und einem Pulsator vorgeschlagen, wobei die Melkvorrichtung eine Druckerfassungseinheit aufweist. Die Druckerfassungseinheit dient der Erfassung eines Druckes im Pulsraum. Die Druckerfassungseinheit liefert ein Eingangssignal für eine Einrichtung, mittels derer der Pulsator und/oder das Element, durch das der Strömungswiderstand verändert wird, betätigt wird.

Weitere Vorteile und Einzelheiten der Erfindung werden anhand der in der Zeichnung dargestellten Ausführungsbeispiele erläutert, ohne dass der Gegenstand der Erfindung auf diese konkreten Ausführugsbeispiele beschränkt wird.

Es zeigen:
- Fig. 1: Schematisch einen Pulsator einer Melkeinrichtung zum Melken eines Tieres,
- Fig. 2: Schematisch den Verlauf des Vakuums im Pulsraum eines Melkbechers,
- Fig. 3: in einer Teilansicht einen Pulsator mit einem Ventil in einer Schwimmstellung,
- Fig. 4: den Pulsator nach Fig. 3 mit dem Ventil in einer Endstellung,
- Fig. 5: im Schnitt und schematisch ein einen Pulsator mit einem Hauptventil in einer Schwimmstellung,
- Fig. 6: einen Pulsator,
- Fig. 7: einen weiteren Pulsator in der Belüftungsphase im Schnitt,
- Fig. 8: den Pulsator nach Fig. 7 in der Evakuierungsphase im Schnitt,
- Fig. 9: eine Aufsicht des Pulsators nach Fig. 7 in der Belüftungsphase,
- Fig. 10: eine Aufsicht des Pulsators nach Fig. 7 in der Evakuierungsphase,
- Fig. 11: einen Schieber und Belüftungsöffnungen in der Schieberplatte eines erfindungsgemäßen Pulsators zur Steuerung der Belüftungsphase,
- Fig. 12: einen Schieber und Belüftungsöffnungen in der Schieberplatte eines weiteren Pulsators zur Steuerung der Belüftungsphase,
- Fig. 13: einen Schieber und Belüftungsöffnungen in der Schieberplatte eines weiteren Pulsators zur Steuerung der Evakuierungsphase, und
- Fig. 14: einen Schieber und Belüftungsöffnungen in der Schieberplatte eines weiteren Pulsators zur Steuerung der Evakuierungsphase.

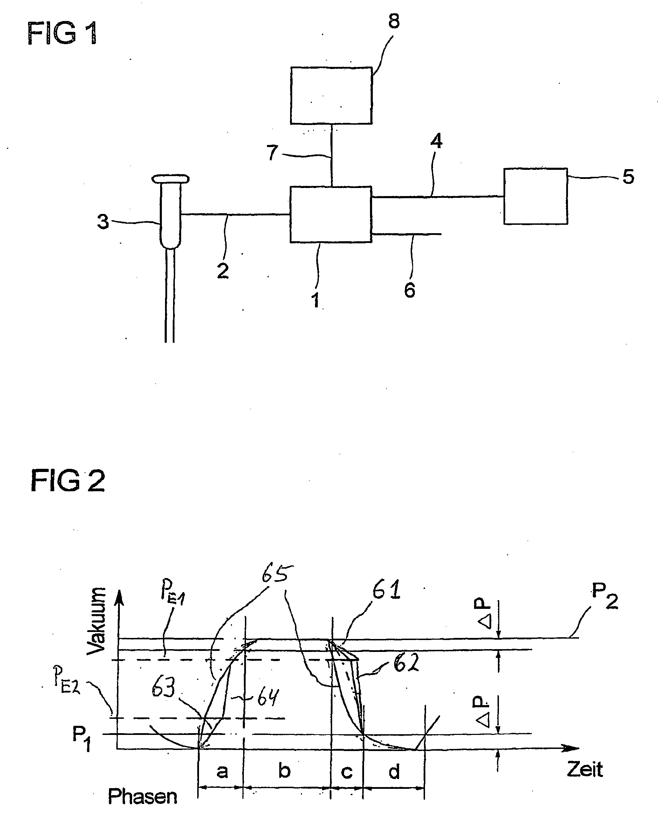

Mit 1 ist in der Figur 1 ein Pulsator bezeichnet. Der Pulsator 1 ist über einen Pulsschlauch 2 mit einem Melkbecher 3 verbunden. Die Verbindung des Pulsators 1 mit dem Melkbecher 3 ist lediglich symbolhaft dargestellt. Weitere Variationsmöglichkeiten der Verbindung des Pulsators 1 mit wenigstens einem Melkbecher sind möglich. Der Pulsator kann auch über einen Pulsschlauch mit einem Sammelstück verbunden sein, das ihrerseits wiederum mit Melkbechern verbunden ist.

Der Pulsator 1 ist über Leitung 4 mit einer Unterdruckquelle 5 verbunden. Mit dem Bezugszeichen 6 ist eine Luftleitung bezeichnet. Die Luftleitung 6 bildet eine Verbindung zwischen der Umgebungsatmosphäre und dem Pulsator 1.

Über eine Signalleitung 7 ist der Pulsator 1 mit einer Einrichtung 8 verbunden. Mittels der Einrichtung 8 wird zumindest der zeitliche Verlauf der Evakuierungsphase und/oder der Belüftungsphase einstellbar.

Die Verläufe der Evakuierungsphase a sowie der Belüftungsphase c sind schematisch in der Figur 2 dargestellt. Eine konventionelle Pulskurve zeigt Linie 65, während die Abfolge der Linien 63, 64, 61 und 62 eine Pulskurve gemäß der Erfindung zeigt. Während der Evakuierungsphase a steigt das Vakuum im Pulsraum des Melkbechers 3 von einem Vakuum P1 auf das höchste Vakuum P2 vermindert um deltaP an. Die Druckdifferenz Δ P liegt vorzugsweise bei 4 kPa. Mit der Phase ***b*** wird eine Zeitspanne bezeichnet, in der das Vakuum im Pulsraum anliegt. Hierbei handelt es sich um eine Vakuumphase. An die Vakuumphase schließt sich eine Belüftungsphase an, in der das Vakuum im Pulsraum auf P1 abfällt. Während der Belüftungsphase *c* findet eine Belüftung statt. Die Zeitspanne, innerhalb der das Vakuum im Pulsraum des Melkbechers unterhalb von P1 liegt, ist als Phase ***d*** bezeichnet. Hierbei kann von einer Druckphase gesprochen werden.

Durch die Einrichtung 8 wird zumindest der zeitliche Verlauf der Evakuierungsphase a und/oder der Belüftungsphase c eingestellt. In der Figur 2 sind hinsichtlich des Verlaufes eines Pulszyklus zwei Variationen dargestellt.

Die Linie 61 zeigt einen flachen Verlauf, bei dem die Bewegung des Zitzengummis durch ein geringeres Belüften des Melkzwischenraumes (Pulsraum) langsamer ist wird. Nach Aufliegen des Zitzengummis auf der Zitze kann nun gemäß Linie 62 schneller belüftet werden, ohne dass es zu einer schädlichen Belastung der Zitze durch die Zitzengummibewegung kommt.

In der Evakuierungsphase wird zunächst langsam evakuiert, so dass sich zunächst ein flacher Verlauf gemäß Linie 63 einstellt und anschließend bei Erreichen des Einfaltdruckes P_{E2} wird schneller weiter evakuiert, so dass sich dann ein steilerer Verlauf ergibt, nachdem das Zitzengummis abgehoben hat.

Bei der Darstellung nach Fig. 2 handelt es sich um eine schematische Darstellung. In der Realität sind die Verläufe abgerundeter als die Linien 61, 62 und 63, 64, so wie es die Linie 65 für einen konventionelles System zeigt. Außerdem ist hier in der schematischen Darstellung die kleine Druckdifferenz nicht eingezeichnet, die eingesetzt wird, um ein vorzeitiges Anlegen bzw. ein vorzeitiges Abheben des Zitzengummis an die Zitze bzw. von der Zitze zu verhindern.

Dazu wird in der Belüftungsphase die langsamere Belüftung durchgeführt, bis der Druck P_{E1} unterschritten ist und sich das Zitzengummi angelegt hat. Umgekehrt wird in der Evakuierungsphase das schnelle Evakuieren gestartet, nachdem das Zitzengummi von der Zitze abgehoben hat. Der jeweilige Druck P_{E1} und P_{E2} kann für die Belüftungsphase und für die Evakuierungsphase deutlich unterschiedlich sein.

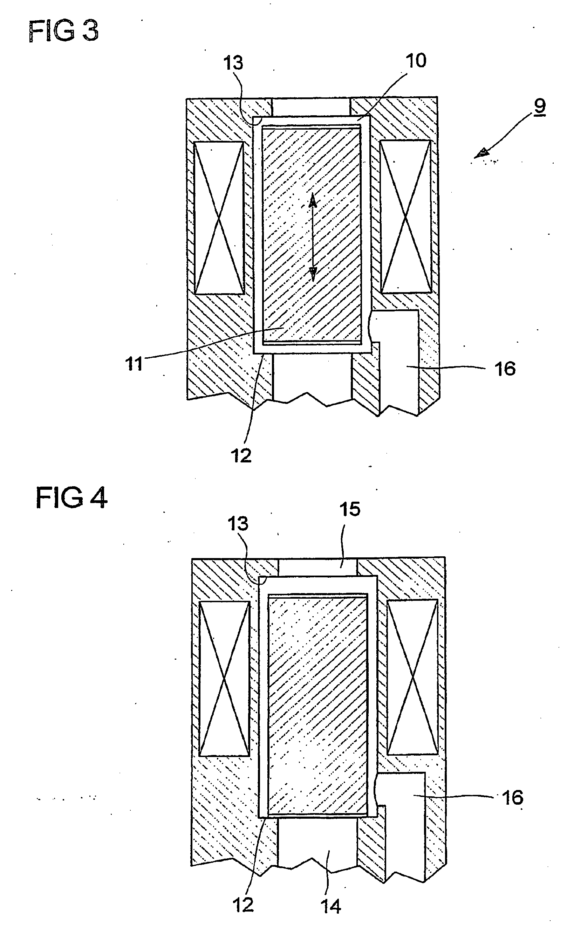

Figur 3 zeigt schematisch einen nicht erfindungsgemäßen Pulsator 1 für eine Melkeinrichtung zum Melken eines Tieres, insbesondere einer Kuh, mit einer Einrichtung mittels derer zumindest der zeitliche Verlauf der Evakuierungsphase und/oder der Belüftungsphase einstellbar ist.

Die Einrichtung weist ein Ventil 9 auf. Das Ventil umfasst eine Kammer 10, in dem ein Ventilkörper 11 beweglich angeordnet ist. Der Ventilkörper 11 ist zur Anlage an einen ersten Ventilsitz 12 bzw. an einen zweiten Ventilsitz 13 anbringbar.

In der Darstellung nach Figur 4 liegt der Ventilkörper 11 auf dem ersten Ventilsitz 12 auf, so dass eine Verbindung eines Kanals 14 mit der Kammer 10 unterbrochen ist. Der Kanal 14 ist über eine nicht dargestellte Leitung mit einer Unterdruckquelle (Vakuumquelle) verbunden. In den zweiten Ventilsitz 13 mündet ein Kanal 15, der mit der Umgebungsatmosphäre in Verbindung steht. Die Kammer 10 steht über einen Kanal 16 mit dem Melkzeug in Verbindung.

In der Figur 4 hat der Ventilkörper eine Endstellung erreicht, in der eine Verbindung eines Melkbechers bzw. des Melkzeugs über den Kanal 16, die Kammer 10 und den Kanal 15 mit der Umgebungsatmosphäre vorliegt, so dass eine Belüftung des Pulsraums des Melkbechers stattfindet.

In einer anderen Endstellung des Ventilkörpers liegt dieser mit seiner Stirnfläche an dem zweiten Ventilsitz 13 an, so dass eine Verbindung des Pulsraums des Melkbechers über den Kanal 16, die Kammer 10 und den Kanal 14 mit einer nicht dargestellten Unterdruckquelle vorliegt.

Der Ventilkörper 11 wird vorzugsweise in eine gezielte Schwimmstellung, d.h. in eine Stellung zwischen seinen Endstellungen gebracht, wie sie in der Figur 3 dargestellt ist. Während der Betätigung des Ventils 9 durchläuft der Ventilkörper aus der Schwimmstellung heraus den Bereich zwischen den Endpositionen. Die Stellung des Ventilkörpers 11 bzw. der Ventilquerschnitt ergibt sich aus den ansteuernden Kräften und Momenten und den im Ventil wirkenden Gegenkräften aufgrund von Reibung, Gewichtskraft, Federkräften oder anderen Rückstellkräften oder dergleichen, und insbesondere den im Ventil wirkenden Druckverhältnissen. Deshalb ergibt sich ein kontinuierlicher Zusammenhang zwischen Steuerkraft/Drehmoment und Ventilquerschnitt. Diese wird in einer Ventilkennlinie wiedergegeben. Die Ansteuerung des Ventils 9 erfolgt in Abhängigkeit von einer Ventilkennlinie, wodurch der Verlauf der Evakuierungsphase und/oder der Belüftungsphase entsprechend eingestellt werden kann.

Bei dem Ventil 9 handelt es sich vorzugsweise um ein elektromagnetisches Ventil. Der Ventilkörper kann dabei permanent magnetische Eigenschaften aufweisen. Die für die Verschiebung des Ventilkörpers aufzubringenden Kräfte stammen von vorzugsweise zwei im wesentlichen axial hintereinander angeordneten Spulen mit entgegengesetzten Wicklungssinn, die bei Stromfluss Elektromagnete mit entgegengesetzten Polen bilden. Der Ventilkörper kann sich axial längs der Spulenachsen bewegen, und zwar bis zu dem ersten bzw. dem zweiten Ventilsitz.

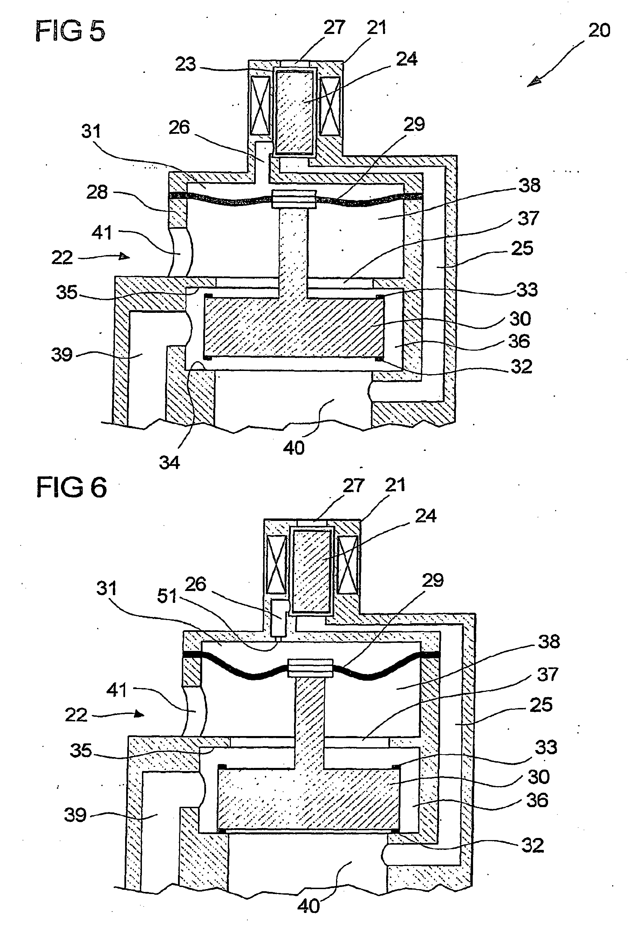

Figur 5 zeigt einen nicht erfindungsgemäßen Pulsator 20 für eine Melkeinrichtung zum Melken eines Tieres, insbesondere einer Kuh, wobei der Pulsator eine Einrichtung aufweist, mittels derer zumindest der zeitliche Verlauf der Evakuierungsphase und/oder der Belüftungsphase einstellbar ist.

Die Einrichtung umfasst ein Pilotventil 21 und ein Hauptventil 20. Das Pilotventil 21 weist eine Kammer 23 auf, in der ein Ventilkörper 24 hin und her zwischen zwei Endstellungen beweglich ist. In die Kammer 23 des Pilotventils 21 münden die Kanäle 25, 26 und 27. Der Kanal 25 ist über einen nicht dargestellten Anschluss des Pulsators mit einer Unterdruckquelle verbunden. Die Mündung des Kanals 25 ist durch den Ventilkörper 24 verschließbar. Auch die Mündung des Kanals 27 ist in einer anderen Stellung des Ventilkörpers 24 verschließbar. Der Kanal 27 verbindet die Kammer 23 mit der Umgebungsatmosphäre.

Durch den Kanal 26 ist die Kammer 23 mit einem oberen Raum 31 verbunden. Der obere Raum 31 ist in einem Gehäuse 28 ausgebildet. Dieser ist begrenzt durch das Gehäuse sowie durch eine Membrane 29, die elastisch ausgebildet ist. Mit der Membrane 29 ist ein Ventilkörper 30 des Hauptventils 22 verbunden. Der Ventilkörper weist Dichtflächen 32, 33 auf. Die Ventilfläche 32 ist zur Anlage an den Ventilsitz 34 während die Dichtfläche 33 an den Ventilsitz 35 anbringbar ist.

Der Ventilkörper 30 ist in einer Kammer 36 angeordnet. Die Kammer 36 steht über einen Durchgang 37 in Verbindung mit einem unteren Raum 38, der durch das Gehäuse 28 und die Membrane 29 begrenzt ist.

In die Kammer 36 mündet ein Kanal 39, der mit dem Pulsraum eines Melkbechers verbindbar ist. Die Kammer 36 des Hauptventils 22 ist auch mit einer Vakuumquelle über den Kanal 40 verbindbar. Innerhalb des Gehäuses 28 ist eine Öffnung 41 vorgesehen, so dass der untere Raum 38 mit der Umgebungsatmosphäre in Verbindung steht.

Bei dem Pilotventil 21 handelt es sich vorzugsweise um ein Ventil, das weitgehend binär betrieben wird. Wird der Ventilkörper 24 des Pilotventils 21 nach oben hin bewegt, so verschließt dieser die Mündung des Kanals 27, so dass die Verbindung der Kammer 23 mit der Umgebungsatmosphäre unterbrochen wird. Gleichzeitig wird die Mündung des Kanals 25 freigegeben. Über den Kanal 25 und den Kanal 40 entsteht innerhalb der Kammer 23 ein Unterdruck, da die Kammer 23 nunmehr über den Kanal 25 und den Kanal 40 mit einer Vakuumquelle verbunden ist. Bedingt durch den Kanal 26, der die Kammer 23 mit dem oberen Raum 31 verbindet, entsteht an der Membrane 29 eine Druckdifferenz, da in dem oberen Raum 31 ein geringerer Druck herrscht als in dem unteren Raum 38. Die durch die Druckdifferenz einwirkenden Kräfte auf die Membrane 29 führen dazu, dass sich die Membrane 29 nach oben hin, d. h. in Richtung des oberen Raumes 31 bewegt. Aufgrund der starren Verbindung des Ventilkörpers 30 des Hauptventils 22 mit der Membrane wird der Ventilkörper 30 soweit in Richtung des Ventilsitzes 35 bewegt, bis die Ventilfläche 33 auf dem Ventilsitz 35 anliegt. Die Geschwindigkeit, mit der sich der Ventilkörper 30 in Richtung des Ventilsitzes 35 bewegt, ist auch von dem Volumen des oberen Raumes 31 abhängig.

Mit der Bewegung des Ventilkörpers 30 des Hauptventils 22 wird die Verbindung zwischen der Vakuumquelle und einem Melkzeug über den Kanal 40, die Kammer 36 des Hauptventils und den Kanal 39 hergestellt.

Während der Bewegung des Ventilkörpers 30 wird der freie Strömungsquerschnitt für die Verbindung der Kanäle 39 und 40 zunehmen, während der Verbindungsquerschnitt zwischen dem unteren Raum 38 und dem Kanal 39 abnimmt. In seiner Endstellung liegt die Ventilfläche 33 des Ventilkörpers 30 am Ventilsitz 35 an.

Für die Belüftungsphase wird das Pilotventil 21 aktiviert. Hierzu wird der Ventilkörper 24 des Pilotventils 21 derart bewegt, dass der Ventilkörper die Mündung des Kanals 25 im Raum 23 des Pilotventils 21 verschließt. Während dieses Vorgangs wird die Mündung des Kanals 27 geöffnet, so dass eine Verbindung zwischen der Atmosphäre der Umgebung und der Kammer 23 hergestellt wird. Es findet eine Belüftung des oberen Raums 31 statt bis sich beidseits der Membrane 29 ein Kräftegleichgewicht einstellt. Während dieses Vorgangs bewegt sich der Ventilkörper von dem Ventilsitz 35 weg in Richtung des Ventilsitzes 34 bewegt, so dass das Melkzeug über den Kanal 39, die Kammer 36 des Hauptventils und den Durchgang 37 mit der Umgebungsatmosphäre in Verbindung kommt, wodurch eine Belüftung des Pulsraumes des Melkzeugs erfolgt.

Figur 6 zeigt einen weiteren nicht erfindungsgemäßen Pulsator. Der Pulsator 50 unterscheidet sich von dem in der Figur 5 dargestellten Pulsator 20 dadurch, dass in dem Kanal 26 ein Element 51 vorgesehen ist, welches einen Strömungswiderstand bildet. Der zeitliche Verlauf der Evakuierungsphase ist abhängig von dem Element 51.

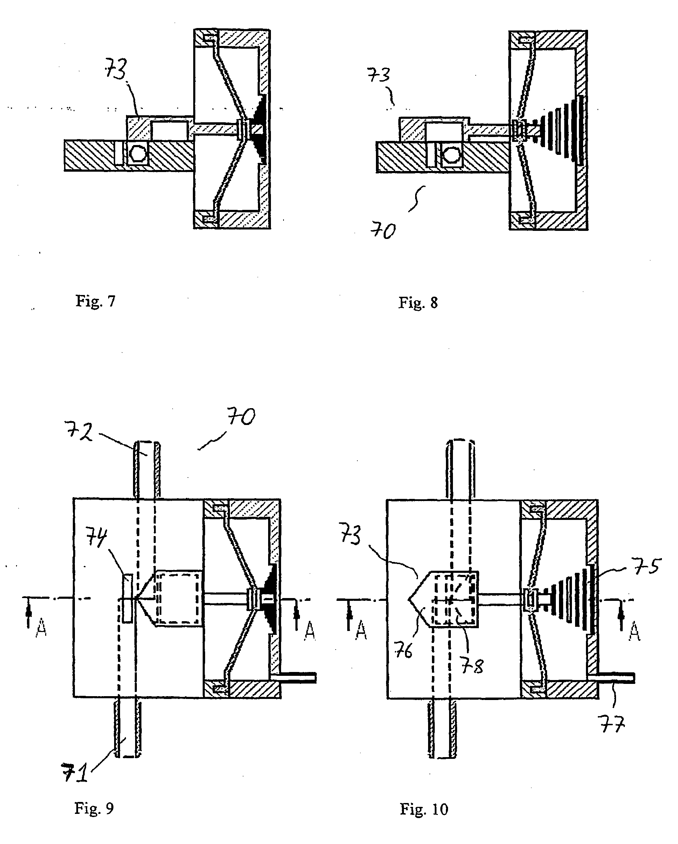

In den Figuren 7 bis 10 ist ein weiterer, nicht erfindungsgemäßen Pulsator 70 dargestellt.

Der Pulsator 70 ist in Fig. 7 im Schnitt dargestellt. Er befindet sich in der Belüftungsphase. Es handelt sich hier um ein Schieberventil. Der Schieber 73 gibt in dieser Position die Öffnung 74 frei. Die Spitze 76 des Schiebers ist dreieckig. Beim Wechsel von der in Fig. 8 und 10 dargestellten Evakuierungsphase in die Belüftungsphase wird der Schieber 73 in der Darstellung nach den Fig. 7 bis 10 nach rechts gegen die Vorbelastungskraft der Feder 75 gezogen. Dabei gibt die dreieckige Spitze 76 des Schiebers 73 zunächst kleine Bereiche der Öffnung 74 neben der vordersten Spitze 76 zur Belüftung frei und ein zunächst geringer Luftstrom kann zum Pulsraum des Melkbechers strömen.

Mit zunehmendem Verfahrweg in Richtung der Endanschlag wird der freigegebene Teil der Öffnung größer und die Geschwindigkeit der Druckzunahme steigt im Vergleich zu einem konventionellem System, bei dem der gesamte Querschnitt gleichzeitig oder doch nahezu gleichzeitig geöffnet wird, denn die Zeit die ein konventioneller Schieber zum Öffnen benötigt liegt im Bereich weniger Millisekunden. Hier wird hingegen der Schieber 73 durch entsprechenden Impulse in einer schwimmenden Stellung gehalten und gibt die Öffnung nur langsam und kontrolliert frei. Anstatt eines Anschlusses mit Feder 75 und Steuervakuum 77 kann auch ein Hubmagnet (nicht dargestellt) vorgesehen werden, der besonders einfach durch elektrische Impulse in einer schwimmenden Stellung gehalten werden kann.

Die Evakuierungsöffnung 78 ist ebenfalls dreieckig gestaltet und in Figuren 8 und 10 gestrichelt eingezeichnet. Wenn von der d-Phase ausgehend der Pulsraum wieder evakuiert werden soll, wird die a-Phase, also die Evakuierungsphase, eingeleitet. Dazu wird der Schieber 73 aus der in Figuren 7 und 9 gezeigten Stellung nach links bewegt, so dass die Vakuumversorgungsleitung 72 über den Schieber 73 mit dem Pulsraumanschluß 71 des Melkbechers verbunden wird. Jetzt wiederum wirkt die gerade Kante des Schiebers 73 mit der Spitze der dreieckigen Evakuierungsöffnung 78 zusammen. Zunächst wird nun ein kleiner Querschnitt freigegeben. Mit zunehmendem Verfahrweg wird der Querschnitt größer und die Evakuierungsgeschwindigkeit steigt.

Die Steuerung kann in allen diesen Fällen schwimmend erfolgen. Oder aber der Schieber wird entsprechend langsam verfahren. Das kann z.B. durch ein geeignetes Vakuum an der Steuervakuumleitung 77 erfolgen.

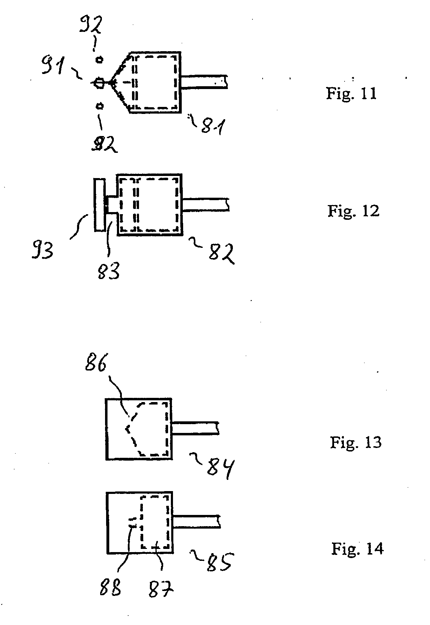

Figur 11 zeigt einen erfindungsgemäßen Pulsator. In Figuren 12 bis 14 sind noch weitere Ausftihrungsbeispiele von Schiebepulsatoren 73 dargestellt.

Der Schieber 81 aus Fig. 11 weist eine dreieckige Spitze auf, wie der Schieber 73 aus Fig. 7. Bei dem Pulsator nach Fig. 11 sind aber drei Belüftungsöffnungen 91 und 92 in der Schieberplatte vorgesehen. Die beiden seitwärts von der zentralen Symmetrieachse angeordneten Belüftungsöffnung 92 werden zunäüchst geöffnet und ein relativ geringer Luftstrom kann in den Kanal 71 eintreten. Nach erfolgter Weiterverschiebung wird auch die Öffnung 91 frei gegeben und die Druckänderungsgeschwindigkeit nimmt zu.

Der Schieber 82 nach Fig. 12 hat vorne einen recheckigen Vorsprung, so dass beim zurückziehen zunächst die seitlichen Bereiche freigegeben werden, bevor schließlich die gesamte - hier wie in Fig. 7 rechteckig gestaltete Belüftungsöffnung 93 - freigegeben wird.

Die in Figuren 13 und 14 dargestellten Schieber 84 und 85 sind für eine Steuerung der Evakuierungsphase vorgesehen. Der Hohlraum 86 ist in Richtung auf die Pulsraumleitung 71 zum Melkbecher dreieckig gestaltet und der Schieber 85 hat im vorderen Bereich des Hohlraumes 87 einen schmalen Ausläufer 88, der zunächst in Kontakt mit der Pulsraumleitung 71 gerät. Dadurch ist jeweils ein zunächst langsameres Evakuieren und anschließend schnelleres Evakuieren möglich.

Auch eine Kombination der unterschiedlichsten Ausführungsbeispiele ist möglich, insbesondere der Schieber- und Luftkanalformen.

Je nach Steuerung des Pulsators können so erfindungsgemäß zwei und mehr unterschiedliche Geschwindigkeiten einer Druckänderungsphase eingestellt werden.

### Bezugszeichenliste

- 1: Pulsator
- 2: Pulsschlauch
- 3: Melkbecher
- 4: Leitung
- 5: Unterdruckquelle
- 6: Luftleitung
- 7: Signalleitung
- 8: Einrichtung
- 9: Ventil
- 10: Kammer
- 11: Ventilkörper
- 12: Erster Ventilsitz
- 13: Zweiter Ventilsitz
- 14: Kanal
- 15: Kanal
- 16: Kanal
- 20: Pulsator
- 21: Pilotventil
- 22: Hauptventil
- 23: Kammer
- 24: Ventilkörper
- 25: Kanal
- 26: Kanal
- 27: Kanal
- 28: Gehäuse
- 29: Membrane
- 30: Ventilkörper
- 31: Oberer Raum
- 32: Ventilfläche
- 33: Ventilfläche
- 34: Ventilsitz
- 35: Ventilsitz
- 36: Kammer
- 37: Durchgang
- 38: Unterer Raum
- 39: Kanal
- 40: Kanal
- 41: Öffnung
- 50: Pulsator
- 51: Element
- 61: erste Geschwindigkeit bei der Belüftung
- 62: zweite Geschwindigkeit bei der Belüftung
- 63: erste Geschwindigkeit bei der Evakuierung
- 64: zweite Geschwindigkeit bei der Evakuierung
- 65: konventionelle Pulskurve
- 70: Pulsator
- 71: Pulsraumleitung zum Melkbecher
- 72: Anschluß Vakuumversorgung
- 73: Schieber
- 74: Öffnung
- 75: Feder
- 76: dreieckige Spitze
- 77: Steuervakuumanschluß
- 78: Evakuierungsöffnung
- 81, 82: Schieber
- 83: Nase
- 84, 85: Schieber
- 86, 87: Hohlraum
- 88: Ausläufer
- 91, 92, 93: Belüftungsöffnungen

## Patentansprüche

1. Verfahren zum maschinellen Melken eines Tieres, beispielsweise einer Kuh, bei welchem ein pulsierender Unterdruck in einem Pulsraum eines Melkbechers (3) erzeugt wird, indem in den Druckänderungsphasen, der Unterdruck in dem Pulsraum verändert wird und bei welchem der Druckverlauf während wenigstens einer Druckänderungsphase (a, c) über ein Verstellen einer Stelleinrichtung in wenigstens zwei Geschwindigkeiten gesteuert wird,
**dadurch gekennzeichnet,**
**dass** der zeitliche Verlauf wenigstens einer Druckänderungsphase (a, c) in Abhängigkeit von einer Ventilkennlinie eines Ventils (9, 21, 22) mit wenigstens zwei Ventilöffnungen (91, 92) des Pulsators (1, 20, 50, 70) eingestellt wird, wobei der Ventilquerschnitt des Ventils des Pulsators verändert wird, um die Geschwindigkeit während der Druckänderungsphase zu verändern.

2. Verfahren nach Anspruch 1, bei dem der Druckverlauf während der Belüftungsphase (c) und/oder während der Evakuierungsphase (a) gesteuert wird.

3. Verfahren nach einem der vorhergehenden Ansprüche, bei dem die Geschwindigkeit der Druckänderung innerhalb eines Zeitabschnittes im wesentlichen kontinuierlich verläuft.

4. Verfahren nach einem der vorhergehenden Ansprüche, bei dem die Evakuierungsphase (a) und/oder die Belüftungsphase (c) zumindest innerhalb eines Zeitabschnittes im wesentlichen diskontinuierlich verläuft.

5. Verfahren nach einem der vorhergehenden Ansprüche, bei dem der Druckverlauf in einem ersten Abschnitt und in einem Folgeabschnitt der Belüftungsphase (c) derart gesteuert wird, dass der Druckverlauf in dem ersten Abschnitt kleiner ist als in dem Folgeabschnitt.

6. Verfahren nach einem der vorhergehenden Ansprüche, bei dem der Druckverlauf in einem ersten Abschnitt und in einem Folgeabschnitt der Evakuierungsphase (a) derart gesteuert wird, dass der Druckverlauf in dem ersten Abschnitt größer ist als in dem Folgeabschnitt.

7. Verfahren nach einem der vorhergehenden Ansprüche, bei dem von dem ersten zu dem zweiten Abschnitt umgeschaltet wird, wenn der Druck im Pulsraum in einem Bereich eines Einfaltdruckes des Zitzengummis liegt.

8. Verfahren nach einem der vorhergehenden Ansprüche, bei dem der Ventilquerschnitt eines Ventils (9, 21, 22) des Pulsators (1, 20, 50, 70) mehrstufig verändert wird.

9. Verfahren nach einem der vorhergehenden Ansprüche, bei dem der Ventilquerschnitt eines Ventils (9, 21, 22) des Pulsators (1, 20, 50, 70) kontinuierlich verändert wird.

10. Verfahren nach einem der vorhergehenden Ansprüche, bei dem der Druck im Pulsraum erfasst wird, welcher ein Eingangssignal einer Baueinheit bildet, wobei die Baueinheit ein Ausgangssignal liefert, durch welches der Pulsator betätigt und/oder der Strömungswiderstand eingestellt wird.

11. Pulsator für eine Melkeinrichtung zum Melken eines Tieres, beispielsweise einer Kuh, zum abwechselnden Verbinden einer Unterdruck- und einer Druckquelle (5) mit einem Pulsraum wenigstens eines Melkbechers (3), wobei eine Einrichtung vorgesehen ist, mittels derer zumindest der zeitliche Druckverlauf während wenigstens einer Druckänderungsphase (a, c) in wenigstens zwei Geschwindigkeiten steuerbar ist,
**dadurch gekennzeichnet,**
**dass** der Pulsator wenigstens ein Ventil (9, 20, 21) aufweist und der zeitliche Verlauf der wenigstens einen Druckänderungsphase (a, c) in Abhängigkeit von einer Ventilkennlinie des Ventils (9, 21, 22) einstellbar ist, wobei der Ventilquerschnitt des Ventils des Pulsators veränderbar ist, um die Geschwindigkeit während der Druckänderungisphase zu verändern und wobei das Ventil wenigstens zwei Ventilöffnungen (91, 92) aufweist.

12. Pulsator nach Anspruch 11, **dadurch gekennzeichnet, dass** die Einrichtung wenigstens ein Zeitglied aufweist, durch das die Dauer eines Abschnittes einer Druckänderungsphase (a, c) einstellbar ist.

13. Pulsator nach Anspruch 11 oder 12, bei dem der Druckverlauf wenigstens während der Belüftungsphase (c) und/oder während der Evakuierungsphase (a) steuerbar ist.

14. Pulsator nach einem der Ansprüche 11 bis 13, **dadurch gekennzeichnet, dass** ein Pulsatorventil vorgesehen ist, dessen Öffnungsquerschnitt (73, 74) veränderbar ist.

15. Pulsator nach einem der Ansprüche 11 bis 14, **dadurch gekennzeichnet, dass** die Einrichtung ein Pilotventil (21) und ein Hauptventil (22) aufweist.

16. Pulsator nach einem der Ansprüche 11 bis 15, **dadurch gekennzeichnet, dass** die Einrichtung wenigstens ein Direktventil aufweist.

17. Pulsator nach einem der Ansprüche 11 bis 16, **dadurch gekennzeichnet, dass** die zwei Ventilöffnungen (91, 92) unterschiedliche Querschnitte aufweisen.

18. Melkvorrichtung mit wenigstens einem Melkbecher und einem zugeordneten Pulsator nach einem der Ansprüche 11 bis 17, sowie mit einer Druckerfassungseinheit zur Erfassung eines Druckes im Pulsraum des Melkbechers, wobei diese ein Eingangssignal für die eine Einrichtung liefert mittels derer der Pulsator und/oder das Element betätigt wird.

## Claims

1. A method for machine-milking an animal such as a cow wherein a pulsed vacuum is generated in a pulse chamber of a teat cup (3) by altering the vacuum in the pulse chamber during the pressure changing phases and wherein the pressure curve is controlled at least during one pressure changing phase (a, c) in at least two speed rates by way of adjusting an adjusting means,
**characterized in**
**that** the time curve of at least one pressure changing phase (a, c) is adjusted in dependence on a valve characteristic of a valve (9, 21, 22) having at least two valve openings (91, 92) of the pulsator (1, 20, 50, 70), wherein the valve cross-section of the valve of the pulsator is changed so as to change the speed during the pressure changing phase.

2. The method according to claim 1 wherein the pressure curve is controlled during the ventilation phase (c) and/or during the evacuation phase (a).

3. The method according to any of the preceding claims wherein the speed of pressure changes within a time stage is substantially continuous.

4. The method according to any of the preceding claims wherein the evacuation phase (a) and/or the ventilation phase (c) is/are substantially discontinuous at least within one time stage.

5. The method according to any of the preceding claims wherein the pressure curve in a first stage and in a subsequent stage of the ventilation phase (c) is controlled such that the pressure curve in the first stage is smaller than in the subsequent stage.

6. The method according to any of the preceding claims wherein the pressure curve in a first stage and in a subsequent stage of the evacuation phase (a) is controlled such that the pressure curve in the first stage is larger than in the subsequent stage.

7. The method according to any of the preceding claims wherein shifting from the first to the second stage occurs while the pressure in the pulse chamber lies in the region of the teat liner infolding pressure.

8. The method according to any of the preceding claims wherein the valve cross-section of a valve (9, 21, 22) of the pulsator (1, 20, 50, 70) is changed in multiple steps.

9. The method according to any of the preceding claims wherein the valve cross-section of a valve (9, 21, 22) of the pulsator (1, 20, 50, 70) is changed continuously.

10. The method according to any of the preceding claims wherein the pressure in the pulse chamber is captured which pressure forms an input signal of a component with the component supplying an output signal through which the pulsator is actuated and/or the flow resistance is adjusted.

11. A pulsator for a milking means for milking an animal such as a cow for alternatively connecting a vacuum source and a pressure source (5) to a pulse chamber of at least one teat cup (3), wherein a means is provided by means of which at least the pressure time curve can be controlled at least during one pressure changing phase (a, c) in at least two speed rates, **characterized in**
**that** the pulsator comprises at least one valve (9, 20, 21) and the time curve of the at least one pressure changing phase (a, c) is adjustable in dependence on a valve characteristic of the valve (9, 21, 22), wherein the valve cross-section of the valve of the pulsator is variable for changing the speed during the pressure changing phase and wherein the valve comprises at least two valve openings (91, 92).

12. The pulsator according to claim 11, **characterized in that** the device comprises at least one timing element by means of which the duration of a stage of a pressure changing phase (a, c) is adjustable.

13. The pulsator according to claim 11 or 12 wherein the pressure curve is controllable at least during the ventilation phase (c) and/or during the evacuation phase (a).

14. The pulsator according to any of the claims 11 to 13, **characterized in that** a pulsator valve is provided whose opening cross-section (73, 74) is variable.

15. The pulsator according to any of the claims 11 to 14, **characterized in that** the device comprises a pilot valve (21) and a main valve (22).

16. The pulsator according to any of the claims 11 to 15, **characterized in that** the device comprises at least one direct valve.

17. The pulsator according to any of the claims 11 to 16, **characterized in that** the two valve openings (91, 92) have different cross-sections.

18. A milking device comprising at least one teat cup and an associated pulsator according to any of the claims 11 to 17, and a pressure capturing unit for capturing a pressure in the pulse chamber of the teat cup wherein it supplies an input signal for the one device by means of which the pulsator and/or the component is/are actuated.

## Revendications

1. Procédé pour la traite mécanique d'un animal, par exemple d'une vache, par lequel est créée une dépression pulsatoire dans une chambre de pulsation d'un gobelet trayeur (3), la dépression dans la chambre de pulsation changeant pendant les phases de variation de pression, et par lequel l'évolution de la pression est contrôlée pendant au moins une phase de variation de pression (a, c) par le biais d'un ajustement d'un dispositif de commande à au moins deux vitesses,
**caractérisé en ce**
**que** l'évolution temporelle d'au moins une phase de variation de pression (a, c) est réglée en fonction d'une caractéristique d'une valve (9) à au moins deux ouvertures de valve (91, 92) du pulsateur (1, 20, 50, 70), la section de passage de la valve du pulsateur étant modifiée pour modifier la vitesse au cours de la phase de variation de pression.

2. Procédé selon la revendication 1, l'évolution de la pression étant contrôlée pendant la phase d'arrivée d'air (c) et/ou pendant la phase d'évacuation de l'air (a).

3. Procédé selon l'une quelconque des revendications précédentes, la vitesse de la variation de pression étant sensiblement continue au cours d'un intervalle de temps.

4. Procédé selon l'une quelconque des revendications précédentes, la phase d'évacuation de l'air (a) et/ou la phase d'arrivée d'air (c) étant sensiblement discontinues au moins au cours d'un intervalle de temps.

5. Procédé selon l'une quelconque des revendications précédentes, l'évolution de la pression étant contrôlée sur un premier intervalle de temps et sur un intervalle suivant de la phase d'arrivée d'air (c) de telle sorte que la pression est plus basse au cours du premier intervalle de temps qu'au cours de l'intervalle suivant.

6. Procédé selon l'une quelconque des revendications précédentes, l'évolution de la pression étant contrôlée sur un premier intervalle de temps et sur un intervalle suivant de la phase d'évacuation de l'air (a) de telle sorte que la pression est plus élevée au cours du premier intervalle qu'au cours de l'intervalle suivant.

7. Procédé selon l'une quelconque des revendications précédentes, le passage entre le premier et le deuxième intervalle de temps étant commuté lorsque la pression dans la chambre de pulsation a atteint un niveau où le manchon trayeur est comprimé.

8. Procédé selon l'une quelconque des revendications précédentes, la section de passage d'une valve (9, 21, 22) du pulsateur (1, 20, 50, 70) étant modifiée en plusieurs étapes.

9. Procédé selon l'une quelconque des revendications précédentes, la section de passage d'une valve (9, 21, 22) du pulsateur (1, 20, 50, 70) étant modifiée en continu.

10. Procédé selon l'une quelconque des revendications précédentes, la pression en chambre de pulsation étant mesurée, cette pression générant un signal d'entrée d'une unité physique, ladite unité physique livrant un signal de sortie mettant en marche le pulsateur et/ou arrêtant la résistance à l'écoulement.

11. Pulsateur pour un dispositif de traite pour traire un animal, par exemple une vache, pour relier en alternance une source de dépression et de pression (5) à une chambre de pulsation d'au moins un gobelet trayeur (3), un dispositif étant prévu permettant de contrôler au moins l'évolution temporelle de la pression pendant au moins une phase de variation de pression (a, c) à au moins deux vitesses,
**caractérisé en ce**
**que** le pulsateur présente au moins une valve (9, 20, 21) et que l'évolution temporelle d'au moins une phase de variation de la pression (a, c) est ajustable en fonction d'une caractéristique de la valve (9, 21, 22), la section de passage de valve de la valve du pulsateur étant modifiable pour modifier la vitesse au cours de la phase de variation de pression, et la valve présentant au moins deux ouvertures de valves (91, 92).

12. Pulsateur selon la revendication 11, **caractérisé en ce que** le dispositif présente au moins un relais de temporisation qui permet d'ajuster la durée d'un intervalle d'une phase de variation de pression (a, c).

13. Pulsateur selon la revendication 11 ou 12, la pression étant réglable au moins pendant la phase d'arrivée d'air (c) et/ou pendant la phase d'évacuation de l'air (a).

14. Pulsateur selon l'une quelconque des revendications 11 à 13, **caractérisé en ce qu'**une valve de pulsation est prévue, dont la section d'ouverture (73, 74) est modifiable.

15. Pulsateur selon l'une quelconque des revendications 11 à 14, **caractérisé en ce que** le dispositif présente une valve pilote (21) et une valve principale (22).

16. Pulsateur selon l'une quelconque des revendications 11 à 15, **caractérisé en ce que** le dispositif présente au moins une valve directe.

17. Pulsateur selon l'une quelconque des revendications 11 à 16, **caractérisé en ce que** les deux ouvertures de valve (91, 92) présentent des sections différentes.

18. Dispositif de traite comportant au moins un gobelet trayeur et un pulsateur correspondant, selon l'une quelconque des revendications 11 à 17, ainsi qu'une unité de mesure de la pression pour déterminer une pression dans la chambre de pulsation du gobelet trayeur, ladite unité générant un signal d'entrée pour ledit dispositif, lequel actionne le pulsateur et/ou l'élément.
